# EUROPEAN PATENT APPLICATION

(11) **EP 4 578 660 A1**
(43) Date of publication of application: **02.07.2025**
(21) Application number: 23383387.0
(22) Date of filing: 27.12.2023
(51) Int. Cl.: B60B 1/04, B60B 21/06

(54) **INTERNAL CONVERTER NIPPLE FOR BEING MOUNTED IN A RIM FOR EXTERNAL NIPPLES**

(71) Applicant: ORBEA, S. COOP., 48269 Mallabia (BIZKAIA) (ES)
(72) Inventor: CAMBRONERO GONZÁLEZ, Juan Carlos, 48269 Mallabia (BIZKAIA) (ES)
(74) Representative: Cueto, Sénida

(57) **Abstract**

The invention discloses an internal converter nipple (1) for being mounted in a rim for external nipples. The nipple (1) comprises an elongated body (2) having a threaded internal orifice (21) configured for the connection of an end of a bicycle spoke (R) and a head (3) protruding radially from an end of said body (2). The nipple (1) further comprises an extension (4) at a side of the head (3) opposite to that where the body (2) is, said extension (4) comprising an internal orifice (41) configured for the passage on the end of the spoke (R). The external diameter (D) and the length (L) of the extension (4) are configured to fit into a hole (A_{E}) of the rim (LL_{E}) for external nipples (C_{E}).

## Description

### Object of the invention

The present invention belongs to the field of bicycles, and more particularly to the design and production of the wheels of a bicycle.

The present invention is directed to an internal converter nipple designed to be mounted in a rim intended for external nipples.

### State of the art

Bicycle wheel spokes mainly consist of thin rods connected between the wheel hub and the wheel rim. Specifically, a radially inner end of the spoke is fixed to the hub and a radially outer end of the spoke is fixed to the rim. The connection of the radially outer end of the spoke with the wheel is carried out usually through elements known as nipples.

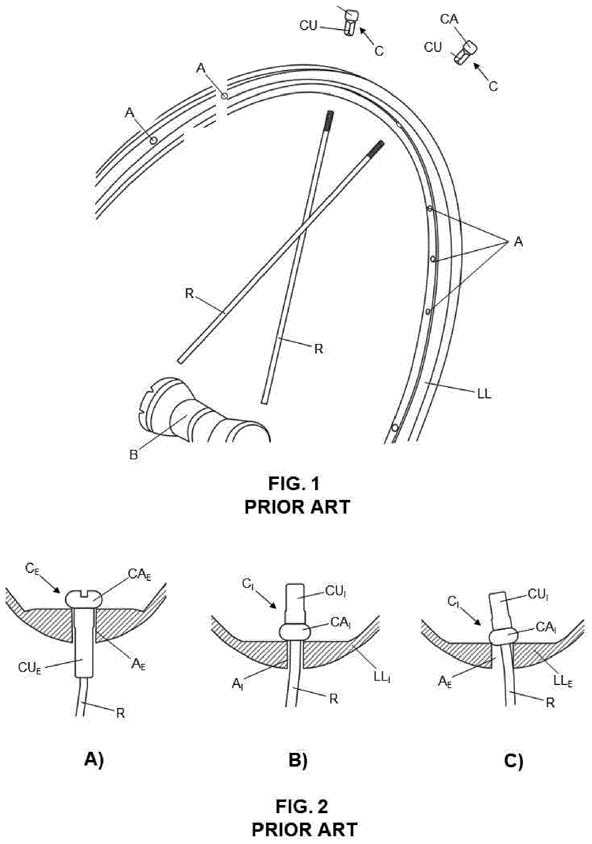

As shown in Fig. 1, a nipple (C) mainly consists of a body (CU) having an orifice provided with an internal thread and a head (CA) whose diameter is larger than the diameter of a hole (A) in the rim (LL) through which the spoke (R) is introduced for connection with the thread of the nipple (C). The nipple (C) is placed at the inner side of the rim (LL) abutting against the edges of the hole (A), such that the orifice of the nipple (C) is aligned with the hole (A) of the rim (LL). The outer end of the spoke (R) is threaded into the orifice of the nipple (C). By modifying the distance by which the end of the spoke (R) is threaded into the orifice of the nipple (C), the tension of the spoke (R) can be adjusted.

Starting from said generic configuration, mainly two types of nipples are known, referred to respectively as internal and external, depending on whether the body (CU) is situated inside or outside the rim (LL).

**External nipple:** An external nipple (C_{E}) is intended to be mounted in a rim (LL_{E}) specifically designed for external nipples (C_{E}). Thereto, as schematically shown in Fig. 2A, the external nipple (C_{E}) is configured for the body (CU_{E}) to pass through the hole (A_{E}) of the rim (LL_{E}), the head (CA_{E}) thus abutting against the edges of the hole (A_{E}) inside the rim (LL_{E}). That is, the body (CU_{E}) has a maximum diameter that is smaller than the diameter of the hole (A_{E}) of the rim (LL_{E}), while the head (CA_{E}) has a diameter that is larger than the diameter of said hole (A_{E}) in the rim (LL_{E}). The body (CUε) of the external nipple (C_{E}), therefore, passes through the hole (A_{E}) and protrudes outwards from the rim (LL_{E}).

The body (CU_{E}) usually has at least a length having a polygon-shaped cross-section, e.g. a square cross section, thereby allowing the user for grasping it manually or using a tool to rotate it and thereby threading the spoke (R) into the orifice of the nipple (C_{E}). In this context, note that normally it is not possible to thread both elements by rotating the spoke (R), since the manner in which the radially inner end of the spoke (R) is usually coupled to the hub (B) prevents the spoke (R) from rotating.

**Internal nipple:** An internal nipple (C_{I}) is intended to be mounted in a rim (LL_{I}) that is specifically designed for internal nipples (C_{I}). Thereto, as shown schematically in Fig. 2B, the internal nipple (C_{I}) is configured for the body (CU_{I}) to be placed completely inside the rim (LL_{I}). That is, in this case the head (CA_{I}) abuts against the edge of the hole (A_{I}) at the inner side of the rim (LL_{I}) and the body (CU_{I}) protrudes inwardly from said rim (LL_{I}) at the side of the head (CA_{I}) opposite to that where the hole (A_{I}) is provided. Also in this case, the body (CU_{I}) has a length having a polygon-shaped cross-section to allow for the spoke (R) to be threaded, although in this case access to the inside of the rim (LL_{I}) is needed to carry out said threading. Naturally, the rim (LL_{I}) must have a double wall to prevent the body (CU_{I}) from damaging the inner tube (not shown in the figures).

On the other hand, note that in this configuration only the spoke (R) passes through the hole (A_{I}) in the rim (LL_{I}). Using internal nipples (C_{I}) is advantageous from an aerodynamic point of view, although this is achieved at the cost of a greater complexity of installation of the spokes (R), since that necessarily requires accessing the interior of the rim (LL_{I}).

In this context, the diameter of the holes (A) of the rim (LL) is greater when external nipples (C_{E}) are used in comparison to when internal nipples (C_{I}) are used. Indeed, when external nipples (C_{E}) are used, the hole (A_{E}) must allow for the passage of the body (CU_{E}) of the external nipple (C_{E}) which, in turn, has the spoke (R) threaded therein. On the contrary, when internal nipples (C_{I}) are used, only the spoke (R) passes through the hole (A_{I}). Therefore, there exist specific rims (LL) for each type of nipple (C). The rims (LL_{I}) intended for internal nipples (C_{I}) have holes (A_{I}) whose diameter can be of about 2 mm or more, while the rims (LL_{E}) intended for external nipples (C_{E}) have holes (A_{E}) having a diameter of approximately 4 mm or more.

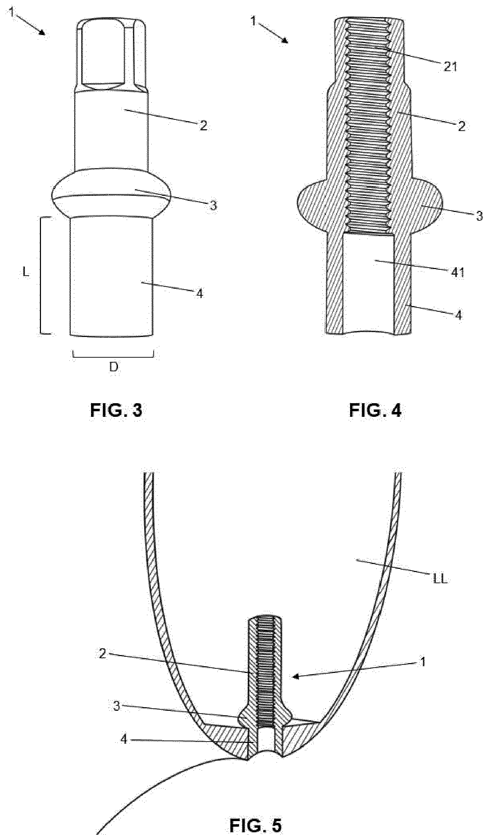

Nowadays, installing internal nipples (C_{I}) in a rim (LL_{E}) intended to be used with external nipples (C_{E}) is not possible. Indeed, the holes (A_{E}) of said rim (LL_{E}) for external nipples (C_{E}) have too large a diameter for the dimensions of an inner nipple (C_{I}). Therefore, as shown in Fig. 3C, if an internal nipple (C_{I}) is installed in a rim (LL_{E}) intended for external nipples (C_{E}), the head (CA_{I}) of the internal nipple (C_{I}) does not firmly abut against the inner edge of the hole (A_{E}) of the rim (LL_{E}).

This is disadvantageous, as it prevents the aerodynamic characteristics of a rim (LL_{E}) for external nipples (C_{E}) to be improved by the installation of internal nipples (C_{I}).

### Brief description of the invention

The inventors of the present invention have solved the above-mentioned drawbacks by means of an internal converter nipple that is provided with an extension configured to fit inside the hole of a rim for external nipples. The internal converter nipples of the present invention thereby perfectly fit inside the holes of a rim intended for external nipples, the spoke being guided by the extension along the hole of the rim. The new internal nipples can therefore be installed in a rim that was originally designed to be used with external nipples.

The internal converter nipple of the invention, therefore, comprises an elongated body having an internal threaded orifice configured for connection with an end of a bicycle spoke and a head protruding radially from an end of said body. The body, normally having a cylindrical length and another length having a polygon-shaped cross-section, has a longitudinal inner orifice. The head may have a number of shapes, although in any case it protrudes radially from the body to abut against the edges of the internal side of the rim hole.

Until this point, the structure corresponding to a conventional nipple has been disclosed. However, the nipple of the invention differs in that it further comprises an extension provided at a side of the head opposite to that where the body is placed. This extension further has an internal orifice configured for the passage of the end of the spoke, that is, an internal orifice that prolongs the internal orifice of the nipple body, such that in practice body make up a single orifice through which the spoke can pass. Furthermore, the internal converter nipple of the invention is advantageous in that the external diameter and the length of the extension are configured to fit into the hole of a rim for external nipples.

In this context, the term "*fit*" refers to the diameter of the extension being only slightly smaller than the diameter of the hole of the rim for external nipples, and the length of the extension is essentially the same as the thickness of the rim wall that the hole in question passes through. Thus, when the nipple is installed, the extension conforms to the lateral surfaces of the rim hole and its end will be approximately flush with the external surface of the rim, although it could be positioned slightly inside or outside the hole depending on the particular thickness of the rim wall.

In preferred embodiments of the invention, the outer diameter of the extension can be between 3.0-5.0 millimetres, more preferably between 3.5-4.5 millimetres, and even more preferably between 3.9-4.1 millimetres.

Also according to preferred embodiments of the invention, the length of the extension can be between 3-6 millimetres, more preferably between 4-5 millimetres, and even more preferably between approximately 4.5 millimetres.

Lastly, the nipples of the invention is preferably made of one or more of the following materials: aluminium, brass, steel, magnesium, titanium, bronze and synthetic fibres.

### Brief description of the figures

The details of the invention as shown in the accompanying figures, which do not intend to limit the scope of the invention:
Fig. 1 shows a perspective view of the position of a number of conventional nipples in a bicycle wheel.
Figs. 2A-C respectively show a conventional external nipple installed in a rim for external nipples, a conventional internal nipple installed in a rim for internal nipples, and an internal nipple installed in a rim for external nipples.
Fig. 3 shows a perspective view of an internal converter nipple according to the present invention.
Fig. 4 shows a longitudinal section of an internal converter nipple according to the present invention.
Fig. 5 shows a cross-section view of an internal converter nipple installed in a rim for external nipples.

### Detailed description of the invention

The invention is now disclosed making reference to the attached drawings.

Figs. 3 and 4 respectively show a perspective view and a longitudinal section of an internal converter nipple (1) according to the present invention where the different parts thereof can be seen. The internal converter nipple (1) is formed by a body (2) having a cylindrical length and a length having polygon-shaped cross-section, square in this case. The polygonal cross-section length allows for the nipple (1) to be grabbed with a suitable tool to make it turn and thereby thread the spoke (R) in it.

At the end of the cylindrical length of the body (2) opposite to that where the polygonal length is provided there is a radial thickening making up the head (3) of the internal converter nipple (1). The head (3) may adopt a number of different shapes, where flat shapes such as, e.g. cylindrical, and curved shapes such as a toroid or the like are known. Heads (3) having different shapes can cooperate in providing a more firm abutment against the edges of the hole (A) of the rim (LL). Both the body (2) and the head (3) are crossed by an internal orifice (21) having a thread that is configured to threadedly receive the corresponding bicycle spoke (R).

The internal converter nipple (1) of the present invention advantageously further comprises an extension (4) provided at the side of the head (3) opposite to that where the body (2) is positioned. The extension (4) has an internal orifice (41) configured to receive the spoke (R), this internal orifice (41) being a prolongation of the orifice (21) of the body (2). Thus, the bicycle spoke (R) can pass through both orifices (21, 41), being threaded thereto. Naturally, the body (2), head (3) and extension (4) make up a single piece.

The main feature of the internal converter nipple (1) is that the prolongation (4) has an outer cylindrical shape, and its dimensions (D, L) are chosen for fitting perfectly inside the hole (A_{E}) of a rim (LL_{E}) designed for external nipples.

In this example, the thickness of the wall of the rim (LL_{E}) for external nipples is 3.9 millimetres, and the diameter of the holes (A_{E}) of said rim (LL_{E}) is 4.3 millimetres. Therefore, the diameter (D) of the extension (4) is of about 4.2 millimetres, and the length (L) of the extension is of about 3.9 millimetres.

Thanks to this configuration, when the internal converter nipples (1) of the present example are installed in the rim (LL_{E}) for external nipples, the extension (4) fits perfectly inside the corresponding hole (A_{E}), as shown in Fig. 5.

## Claims

1. Internal converter nipple (1) for being mounted in a rim for external nipples, comprising an elongated body (2) having an internal threaded orifice configured for the connection of an end of a bicycle spoke (R) and a head (3) protruding radially from an end of said body (2), **characterized by** further comprising an extension (4) at a side of the head (3) opposite to that where the body (2) is, said extension (4) comprising an internal orifice (41) configured for the passage of the end of the spoke (R), where the external diameter (D) and the length (L) of the extension (4) are configured for fitting into a hole (A_{E}) of a rim (LL_{E}) for external nipples (C_{E}).

2. Internal converter nipple (1) according to claim 1, where the extension (4) has a length (L) of between 3.0 millimetres and 6.0 millimetres.

3. Internal converter nipple (1) according to claim 2, where the extension (4) has a length (L) of between 4.0 millimetres and 5.0 millimetres.

4. Internal converter nipple (1) according to claim 3, where the extension (4) has a length (L) of approximately 4.5 millimetres.

5. Internal converter nipple (1) according to any of the previous claims, where the extension (4) has an external diameter (D) of between 3.0 millimetres and 5.0 millimetres.

6. Internal converter nipple (1) according to claim 5, where the extension (4) has an external diameter (D) of between 3.5 millimetres and 4.5 millimetres.

7. Internal converter nipple (1) according to claim 6, where the extension (4) has an external diameter (D) of between 3.9 millimetres and 4.1 millimetres.

8. Internal converter nipple (1) according to any of the previous claims, made in one or more of the following materials: aluminium, brass, steel, magnesium, titanium, bronze and synthetic fibres.
